# EUROPÄISCHE PATENTANMELDUNG

(11) **EP 1 857 672 A2**
(43) Veröffentlichungstag der Anmeldung: **21.11.2007**
(21) Anmeldenummer: 07001608.4
(22) Anmeldetag: 25.01.2007
(51) Int. Cl.: F03D 11/00, F03D 1/06

(54) **Windenenergieanlage, Bauteil für eine Windenergieanlage sowie Verfahren zum Betreiben einer Windenergieanlage mit einem solchen Bauteil**

(30) Priorität: 18.05.2006 DE 102006023642
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Bauteil (22) für eine Windenergieanlage (10), das gekennzeichnet ist durch ein oder mehrere Sensormittel (24), mit Hilfe derer -insbesondere im Frühstadium der Entstehung - Schäden des Bauteils (22), insbesondere Risse detektierbar sind. Die Erfindung betrifft des Weiteren eine Windenergieanlage (10) mit einem derartigen Bauteil (22) sowie ein Verfahren zum Betreiben einer Windenenergleanlage (10).

## Beschreibung

Die Erfindung betrifft eine Windenergieanlage, ein Bauteil einer derartigen Windenergieanlage, insbesondere ein Rotorblatt, sowie ein Verfahren zum Betreiben der Windenergieanlage.

Rotorblätter, aber auch andere Bauteile von Windenergieanlagen, wie etwa der Turm oder der Maschinenträger, sind erheblichen mechanischen Belastungen ausgesetzt. Die besonders kritischen Belastungen sind dabei häufig dynamischer Natur. Bei Windenergieanlagen des Standes der Technik kommt es infolge dieser Belastungen oft zu mechanischen Schäden an den Bauteilen, vor allem zu Rissen an den Rotorblättern. Derartige Schäden sind häufig erst dann zu erkennen, wenn sie weit fortgeschritten sind. In diesem weit fortgeschrittenen Stadium können die Schäden dann - wenn überhaupt - nur mit erheblichem Aufwand repariert werden.

Aufgabe der vorliegenden Erfindung ist es, ein Bauteil für eine Windenergieanlage, eine Windenergieanlage sowie ein Verfahren zum Betreiben der Windenergieanlage anzugeben, mit denen an dem Bauteil, insbesondere an einem Rotorblatt, auftretende mechanische Schäden möglichst frühzeitig erkannt werden können.

Diese Aufgabe wird gelöst durch ein Bauteil, vorzugsweise ein Rotorblatt, mit den Merkmalen des Patentanspruches 1. Die Aufgabe wird des Weiteren gelöst durch eine Windenergieanlage mit den Merkmalen des Patentanspruchs 10 sowie durch ein Verfahren zum Betreiben einer Windenergieanlage mit den Merkmalen des Patentanspruchs 14.

Erfindungsgemäß ist ein Bauteil für eine Windenergieanlage der eingangs genannten Art gekennzeichnet durch Sensormittel, mit Hilfe derer - insbesondere im Frühstadium der Entstehung - mechanische Schäden des Bauteils, insbesondere Risse, automatisch detektierbar sind. Vorteilhafterweise wird das Bauteil demnach unmittelbar mit diesem zugeordneten Sensormitteln auf entstehende mechanische Schäden, wie etwa Wandungsrisse oder dergleichen, überwacht. Die direkte Zuordnung der Sensormittel zu dem Bauteil ermöglicht eine besonders frühzeitige Erfassung entstehender oder bereits entstandener Schäden.

Bevorzugt werden erfindungsgemäß Schäden an Rotorblättern überwacht. Im Stand der Technik weisen Rotorblätter für Windenergieanlagen üblicherweise eine Oberschale und eine Unterschale auf. Risse können dabei - beispielsweise in Rotorblattlängsrichtung - unmittelbar in der Ober- und/oder Unterschale auftreten, nämlich in den Wandungen der Ober- und/oder Unterschale.

In zweckmäßiger Ausgestaltung der Erfindung sind die Sensormittel Teil einer übergeordneten Detektionseinrichtung der Windenergieanlage zur Detektion entstehender oder bereits entstandener Schäden. Die Sensormittel können dabei einer der Detektionseinrichtung zugeordneten Steuerungseinheit Signale - im Folgenden als Sensormittelsignale bezeichnet - übermitteln, die abhängig sind von dem Zustand des Bauteils, d.h. davon, ob ein Bauteilschaden entsteht bzw. bereits entstanden ist oder ob das Bauteil unbeschädigt ist.

Die Detektionseinrichtung kann grundsätzlich zusammen mit den Sensormitteln eine Baueinheit bilden, beispielsweise im Sinne von sogenannten Smart-Sensoren, in denen neben der reinen Erfassung bestimmter physikalischer Eigenschaften die gesamte Signalverarbeitung integriert ist, Bevorzugt sind verschiedene Bauteile der Detektionseinrichtung allerdings nicht unmittelbar dem Bauteil zugeordnet, sondern beispielsweise der Gondel der Windenergieanlage. Hier sind verschiedenste Möglichkeiten denkbar.

Die Steuerungseinheit kann die Sensormittelsignale verarbeiten und geeignete Steuerungssignale erzeugen. Beispielsweise kann abhängig von den erzeugten Sensormittelsignalen der Rotor der Windenergieanlage abgebremst werden- Der Abbremsvorgang kann erfolgen, indem das oder die Rotorblätter automatisch aus dem Wind gedreht werden und/oder eine mechanische Rotor-Bremse betätigt wird.

Die Überwachung des oder jedes Bauteils auf mechanische Bauteilschäden kann kontinuierlich und/oder in vorgegebenen Zeitabständen erfolgen.

Vorzugsweise werden aus der Signalcharakteristik des jeweiligen, von dem Sensormittel erzeugten Signals Kennwerte des Schadens ermittelt, wie etwa insbesondere der genaue Schadensort, die Stärke des Schadens und dergleichen.

Der Rotor kann abhängig von der Signalcharakteristik des Sensormittelsignals und/oder abhängig von der Anzahl von Sensormittelsignalen abgebremst werden.

Die Sensormittel weisen in einer besonders bevorzugten Ausführungsform der vorliegenden Erfindung Leitmittel auf, insbesondere Leiterkabel oder Leiterbahnen, durch die elektrische und/oder magnetische Felder bzw. Signale und/oder elektromagnetische Wellen bzw. Signale leitbar sind. Vorzugsweise sind die Leitmittel Lichtwellenleiter, durch die Lichtsignale leitbar sind.

Die Sensormittel, insbesondere die Leitmittel, können in das Bauteil, insbesondere in die Wandungen des Bauteils, integriert oder eingelassen sein, insbesondere einlaminiert, oder in einfacher Weise auf der Oberfläche des Bauteils angebracht sein.

Die Sensormittel, insbesondere die Leitmittel, können nicht nur dem Rotorblatt zugeordnet werden, sondern beispielsweise auch dem Turm der Windenergieanlage. Es können beispielsweise eine Vielzahl von Leiterkabel, Leiterbahnen, insbesondere Lichtwellenleiter, in der Turmwandung oder an der Innen- oder Außenseite des Turms verlegt werden, vorzugsweise über den inneren oder äußeren Umfang des Turms bzw. der Turmwandung verteilt. Sobald etwa eines dieser Leitmittel durch einen Riss bzw. eine entstehende Fuge im Turm Schaden nimmt, kann dieser Schaden detektiert werden. In gleicher Weise könnten Leitmittel beispielsweise dem Maschinenträger oder anderen Bauteilen der Windenergieanlage zugeordnet werden.

Vorzugsweise werden als Lichtwellenleiter Glasfaserkabel in das Rotorblatt bzw. die Wandungen des Rotorblatts einlaminiert.

Gemäß dem erfindungsgemäßen Verfahren zum Betreiben einer Windenenergieanlage wird zumindest ein Bauteil, insbesondere ein Rotorblatt, während des Betriebs der Windenergieanlage, mittels geeigneter Sensormittel auf das Entstehen und/oder Vorhandensein eines mechanischen Bauteilschadens überwacht und bei Detektion eines Bauteilschadens ein - vorzugsweise für den jeweiligen Schaden charakteristisches - Sensormittelsignal erzeugt.

In einer bevorzugten Ausführungsform können in dem Rotorblatt zugeordnete Leitmittel Prüfsignale eingeleitet und diese Prüfsignale anschließend - nach zumindest teilweisem Durchlaufen der Leitmittel - erfasst werden, wobei durch Schäden an dem Bauteil hervorgerufene Änderungen des Prüfsignals erfasst werden. Vorzugsweise werden Schäden an dem Bauteil durch Vergleich des gemessenen Prüfsignals mit einem vorgegebenen Soll-Prüfsignal bzw. mit einem erwarteten Prüfsignal erkannt.

In ein oder mehrere, dem oder jedem Bauteil zugeordnete Lichtwellenleiter können als Prüfsignale Lichtsignale eingeleitet bzw. eingekoppelt werden, die sich in dem Lichtwellenleiter fortpflanzen. Nach Fortschreiten der Lichtsignale um eine bestimmte Wegstrecke können die Lichtsignale an vorgegebenen Positionen des Lichtwellenleiters, vorzugsweise an dessen Ende, erfasst, insbesondere gemessen werden.

Sollte einer der Lichtwellenleiter durch einen Schaden des Bauteils, beispielsweise durch einen Riss, ebenfalls schadhaft werden bzw. reißen, wird das entsprechende Lichtsignal an der schadhaften Stelle des Lichtleiters verändert oder sogar vollständig blockiert. Sollte die Messposition, an der das Lichtsignal gemessen wird, in Signalrichtung stromab der schadhaften Stelle angeordnet sein, so wird entweder gar kein Signal gemessen oder ein in Bezug auf ein erwartetes Signal verändertes Signal. In ähnlicher Weise können andere Prüfsignale, etwa Stromsignale, durch Leitmittel anderer Art, etwa Stromkabel, gesandt werden, die dem oder jedem Bauteil zugeordnet sind bzw. die insbesondere in das Bauteil bzw. die Bauteilwandung eingelassen sind.

Was die Detektionseinrichtung betrifft, so kann sie beispielsweise einen steuerbaren Signalerzeuger aufweisen zur Erzeugung elektrischer und/oder magnetischer und/oder elektromagnetischer Signale, die durch die Leitmittel der Sensormittel leitbar sind. Des Weiteren kann die Detektionseinrichtung einen Signalempfänger aufweisen zum Empfang elektrischer und/oder magnetischer und/oder elektromagnetischer Signale.

Der Begriff "Signale" ist im Rahmen dieser Anmeldung weit gefasst. In der einfachsten Form können beispielsweise, wie oben angedeutet, in oder an dem Rotorblatt angeordnete, elektrische Leitungen mit einer bestimmten Prüfspannung belegt werden. Auftretende Schäden an dem Bauteil können anschließend zu einer Durchtrennung der Leitungen führen, was durch eine Änderung des Widerstands der Leitung detektierbar ist.

Wenn das Bauteil ein Rotorblatt ist, so verlaufen die Leitmittel, wie insbesondere die Lichtwellenleiter, zumindest annähernd von dem Bereich der jeweiligen Rotorblattspitze bis zum Rotorblattwurzelbereich. Dabei kann zumindest jeweils ein Leiterkabel und/oder zumindest eine Leiterbahn mehrfach zwischen dem Rotorblattspitzenbereich und dem Rotorblattwurzelbereich hin- und hergeführt werden. Ein Riss eines entsprechenden Kabels an irgendeiner Stelle auf dem Weg von der Rotorblattspitze bis zur Rotorblattwurzel, führt zu einer Änderung des jeweils eingeleiteten Prüfsignals gegenüber dem Zustand, in dem die Leitmittel unversehrt sind.

Es können grundsätzlich verschiedenste Sensormittel eingesetzt werden. Denkbar ist auch, das entsprechende Bauteil der Windenergieanlage mittels verschiedenster Arten zerstörungsfreier Prüftechniken während des Betriebs der Windenergieanlage zu überwachen. Zumindest theoretisch ist denkbar, das Bauteil durch Ultraschalltechnik oder mittels anderer geeigneter Methoden auf entstehende oder bereits entstandene Schäden zu überwachen.

Weitere Merkmale der vorliegenden Erfindung ergeben sich aus den beigefügten Unteransprüchen, der nachfolgenden Beschreibung eines bevorzugten Ausführungsbeispieles sowie den beigefügten Zeichnungen. Darin zeigen:
- Fig. 1: eine Windenergieanlage mit erfindungsgemäßem Rotorblatt in Seitenansicht,

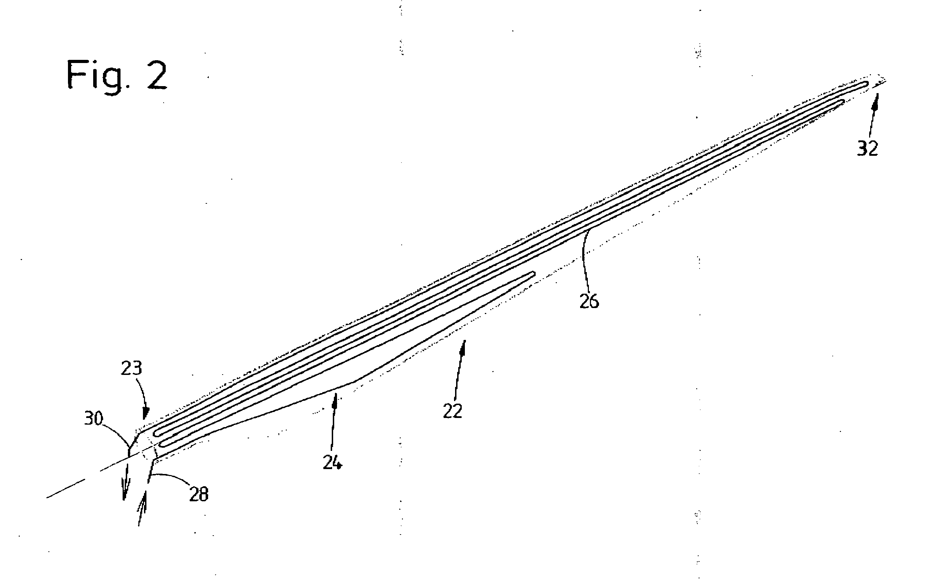

- Fig. 2: eine schematische Darstellung eines erfindungsgemäßen Rotorblattes in Schrägansicht.

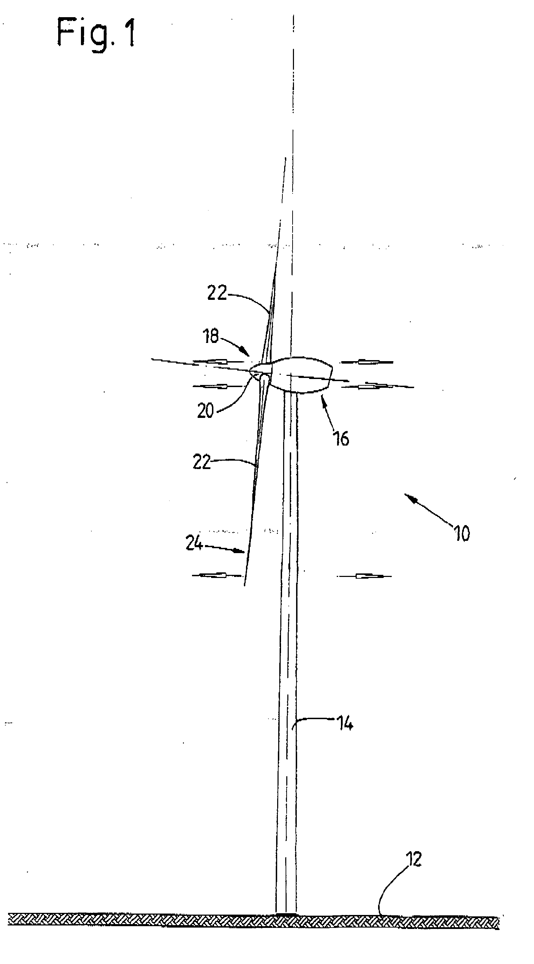

In der Fig. 1 ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms 14 einer Windenergieanlage 10 vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzeln 23 der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel 16 angeordneten Generator in elektrischen Strom umgewandelt. Die Rotorblätter 22 überstreichen während der Rotation eine Kreisfläche. Über eine nicht dargestellte, allerdings den Fachleuten des Standes der Technik bekannte, Verstelleinrichtung können die Rotorblätter 22 einzeln in ihrer Stellung zum Wind verändert werden, das heißt, der Anstellwinkel der Rotorblätter 22 zum Wind ist einstellbar. Verschiedene Funktionen der Windenergieanlage 10 sind über eine nicht dargestellte, geeignete Steuerungseinrichtung steuerbar.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

Jedem Rotorblatt 22 sind Sensormittel 24 zugeordnet, mit denen Schäden des Rotorblattes 22, insbesondere Risse, während des Betriebs der Windenergieanlage 10 detektierbar sind. Die Sensormittel 24 sind Teil einer nicht in weiteren Einzelheiten dargestellten, der Windenergieanlage 10 zugeordneten Detektionseinrichtung zur Detektion entstehender oder bereits entstandener Rotorblattschäden.

Die Sensormittel 24 weisen dazu einen Lichtwellenleiter 26 auf, der in die Wandungen des Rotorblattes 22 eingelassen ist. Denkbar ist alternativ auch, den Lichtwellenleiter 26 auf der Rotorblattoberfläche, d.h. außen an den Wandungen des Rotorblatts 22 zu führen oder an der Innenseite der Wandungen des Rotorblatts 22.

Die beiden Enden 28, 30 des Lichtwellenleiters 26 sind an der Rotorblattwurzel 23 angeordnet. Zwischen den beiden Enden 28, 30 verläuft der Lichtwellenleiter 26 mehrfach annähernd in Längsrichtung des Rotorblatts 22 hin und her zwischen dem Bereich der Rotorblattspitze 32 und dem Bereich der Rotorblattwurzel 23.

In den Lichtwellenleiter 26 können über einen nicht dargestellten Lichtsignalerzeuger der Detektionseinrichtung in dessen eines Ende 28 kontinuierlich Lichtsignale eingekoppelt werden. Diese Lichtsignale durchlaufen den Lichtwellenleiter 26 vollständig bis zum anderen Ende 30. Von einem nicht dargestellten Lichtsignalempfänger der Detektionseinrichtung werden die eingekoppelten Lichtsignale nach dem Durchlaufen des Lichtwellenleiters 26 empfangen. Die empfangenen Lichtsignale sind charakteristisch für den Zustand des Rotorblatts 22.

Falls das Rotorblatt 22 keinerlei Schäden aufweist, entsprechen die Charakteristika des empfangenen Lichtsignals einem vorgegebenen Sollwert.

Falls das Rotorblatt 22 dagegen einen Riss aufweist, der zu einem Riss oder einem Knick des in die Wandung des Rotorblatts 22 eingelassenen Lichtwellenleiters 26 führt, werden die Lichtsignale am Ort des Lichtwellenielterrisses blockiert, zumindest aber verändert. Eine bloße Veränderung des Lichtsignals, insbesondere eine im Vergleich zu einem erwarteten Lichtsignal geringere Intensität, kann sich ergeben, wenn der Lichtwellenleiter 26 nicht gerissen, sondern nur geknickt oder leicht beschädigt ist.

Im Extremfall wird der Lichtsignalfluss sogar unterbrochen, sodass der Lichtsignalempfänger überhaupt kein Signal mehr empfängt.

Der vollständig unterbrochene Lichtsignalfluss bzw. die - falls der Lichtwellenleiter 26 nur beschädigt ist - im Vergleich zu den erwarteten Lichtsignalen veränderten Signale, die der Empfänger empfängt, sind demnach kennzeichnend für den Rotorblattschaden.

Nach Detektion eines Rotorblattschadens können vielfältige Maßnahmen ergriffen werden. Beispielsweise kann automatisch ein Abbremsen des Rotors 18 initiiert werden. Alternativ oder zusätzlich kann über eine Ausgabeeinheit, beispielsweise einen Bildschirm, der Schaden einem Bediener angezeigt werden.

Wie der Fachmann des Standes der Technik erkennt, sind für die genaue Ausbildung der Detektionseinrichtung sowie die eingesetzten Detektionsverfahren, insbesondere die Art bzw. Charakteristika der Lichtsignale und die Auswertung derselben, vielfältige Ausführungsformen denkbar.

Entscheidend ist, dass jedem Rotorblatt 22 Sensormittel 24 zugeordnet sind, mit denen - im Zusammenwirken mit einer Detektionseinrichtung - insbesondere während des Betriebs der Windenergieanlage 10 automatisch Rotorblattschäden detektiert werden können.

In einer weiteren Ausführungsform der Erfindung können auch anderen Bauteilen der Windenergieanlage 10 die vorgenannten Sensormittel 24 zugeordnet werden, etwa dem Maschinenträger der Windenergieanlage 10 oder dem Turm 14. In gleicher Weise wie oben beschrieben werden dann an diesen Bauteilen entsprechende mechanische Schäden detektiert.

### Bezugszeichenliste:

- 10: Windenergieanlage
- 12: Untergrund
- 14: Turm
- 16: Gondel
- 18: Rotor
- 20: Nabe
- 22: Rotorblatt
- 23: Rotorblattwurzel
- 24: Sensormittel
- 26: Lichtwellenleiter
- 28: Wellenleiterende
- 30: Wellenleiterende
- 32: Rotorblattspitze

## Patentansprüche

1. Bauteil, vorzugsweise Rotorblatt, für eine Windenergieanlage, **gekennzeichnet durch** ein oder mehrere Sensormittel (24), mit Hilfe derer - insbesondere im Frühstadium der Entstehung - Schäden des Bauteils, insbesondere Risse, Querfugen oder dergleichen, detektierbar sind.

2. Bauteil gemäß Anspruch 1, **dadurch gekennzeichnet, dass** die Sensormittel (24) Leitmittel aufweisen, insbesondere Leiterkabel oder Leiterbahnen, durch die elektrische und/oder magnetische Felder und/oder elektromagnetische Wellen, leitbar sind.

3. Bauteil gemäß Anspruch 1 und/oder 2, **dadurch gekennzeichnet, dass** die Leitmittel Lichtwellenleiter (26) sind, durch die Lichtsignale leitbar sind.

4. Bauteil gemäß einem oder mehreren der vorhergehenden Ansprüche, **dadurch gekennzeichnet, dass** die Sensormittel (24), insbesondere die Leitmittel, mindestens teilweise in wenigstens eine Wandung des Bauteils integriert, insbesondere einlaminiert sind, vorzugsweise in wenigstens eine Wandung eines Rotorblatts (22), oder dass die Sensormittel (24) an der Oberfläche der wenigstens einen Bauteilwandung angeordnet sind.

5. Bauteil gemäß einem oder mehreren der Ansprüche 2 - 4, **dadurch gekennzeichnet, dass** die Leitmittel, vorzugsweise mindestens eine Leiterbahn oder ein Leiterkabel, mindestens teilweise innerhalb wenigstens einer Wandung des Bauteils hin- und hergeführt ist oder an der Oberfläche der wenigstens einen Wandung des Bauteils.

6. Bauteil gemäß einem oder mehreren der vorhergehenden Ansprüche, **dadurch gekennzeichnet, dass** eine Mehrzahl von Leiterbahnen oder Leiterkabel mindestens teilweise innerhalb wenigstens einer Wandung des Bauteils oder an der Oberfläche des Bauteils angeordnet ist, wobei die Leitbahnen oder Leiterkabel jeweils voneinander beabstandet sind.

7. Bauteil gemäß einem oder mehreren der vorhergehenden Ansprüche, **dadurch gekennzeichnet, dass** das Bauteil ein Rotorblatt (22) ist, wobei die Leitmittel, insbesondere ein oder mehrere Lichtwellenleiter (26), zumindest annähernd von dem Bereich der Rotorblattspitze (32) bis zum Rotorblattwurzelbereich (23) verlaufen.

8. Bauteil gemäß Anspruch 7, **dadurch gekennzeichnet, dass** zumindest ein Leiterkabel und/oder zumindest eine Leiterbahn mehrfach zwischen dem Rotorblattspitzenbereich (32) und dem Rotorblattwurzelbereich (23), insbesondere mehrfach, hin- und hergeführt ist.

9. Bauteil gemäß einem oder mehreren der vorhergehenden Ansprüche, **dadurch gekennzeichnet, dass** das Bauteil der Turm (14) der Windenergieanlage ist, wobei die Leitmittel, insbesondere das oder die Leiterkabel oder Leiterbahnen, um den Umfang des Turmes verteilt wenigstens teilweise in der Turmwandung oder an der inneren oder äußeren Oberfläche der Turmwandung angeordnet sind.

10. Windenergieanlage mit einem Bauteil gemäß einem oder mehreren der vorhergehenden Ansprüche.

11. Windenergieanlage gemäß Anspruch 10, **dadurch gekennzeichnet, dass** die Sensormittel (24) Teil einer Detektionseinrichtung sind zur Detektion - insbesondere im Frühstadium der Entstehung - von Schäden des Bauteils, insbesondere Rissen.

12. Windenenergieanlage gemäß Anspruch 10 und/oder 11, **dadurch gekennzeichnet, dass** die Detektionseinrichtung einen steuerbaren Signalerzeuger aufweist zur Erzeugung elektrischer und/oder magnetischer und/oder elektromagnetischer Signale, die durch Leitmittel der Sensormittel (24) leitbar sind.

13. Windenergieanlage gemäß Anspruch 10, 11 und/oder 12, **dadurch gekennzeichnet, dass** die Detektionseinrichtung einen Signalempfänger aufweist zum Empfang elektrischer und/oder magnetischer und/oder elektromagnetischer Signale.

14. Verfahren zum Betreiben einer Windenergieanlage mit einem Bauteil gemäß einem oder mehreren der Ansprüche 1 - 9, **dadurch gekennzeichnet, dass** das Bauteil der Windenergieanlage, insbesondere ein Rotorblatt (22), vorzugsweise während des Betriebs der Windenergieanlage (10) mittels geeigneter Sensormittel (24) automatisch auf das Entstehen und/oder Vorhandensein eines Bauteilschadens überwacht wird und dass bei Detektion eines Bauteilschadens ein - vorzugsweise für den jeweiligen Schaden charakteristisches - Sensormittelsignal erzeugt wird.

15. Verfahren gemäß Anspruch 14, **dadurch gekennzeichnet, dass** die Überwachung auf Bauteilschäden kontinuierlich und/oder in vorgegebenen Zeitabständen erfolgt.

16. Verfahren gemäß Anspruch 14 und/oder 15, **dadurch gekennzeichnet, dass** aus der Signalcharakteristik des Sensormittelsignals Kennwerte des Schadens ermittelt werden, wie etwa der genaue Schadensort, die Stärke des Schadens und dergleichen.

17. Verfahren gemäß einem oder mehreren der Ansprüche 14 -16, **dadurch gekennzeichnet, dass** der Rotor (18) abhängig von der Sensormittelsignalcharakteristik und/oder abhängig von der Anzahl von Sensormittelsignalen abgebremst wird.

18. Verfahren gemäß einem oder mehreren der Ansprüche 14-17, **dadurch gekennzeichnet, dass** in dem Bauteil (22) zugeordnete, insbesondere an diesem angeordnete, Leitmittel, etwa Lichtwellenleiter (26), Prüfsignale, insbesondere Lichtsignale, eingeleitet und anschließend erfasst, insbesondere gemessen, werden, und dass durch Schäden an dem Bauteil (22) hervorgerufene Änderungen des Prüfsignals erfasst werden.

19. Verfahren gemäß Anspruch 14-18, **dadurch gekennzeichnet, dass** Schäden an dem Bauteil (22) durch Vergleich des gemessenen Prüfsignals mit einem vorgegebenen Soll-Prüfsignal erkannt werden.
